# EUROPÄISCHE PATENTSCHRIFT

(11) **EP 2 803 946 B1**
(45) Veröffentlichungstag und Bekanntmachung des Hinweises auf die Patenterteilung: **16.05.2018**
(21) Anmeldenummer: 14161745.6
(22) Anmeldetag: 26.03.2014
(51) Int. Cl.: G01D 3/028, G01D 5/347, F16C 33/76, F16C 33/74, F16C 19/10

(54) **Winkelmesseinrichtung**
Angle measuring apparatus
Appareil de mesure d'angle

(30) Priorität: 16.05.2013 DE 102013209106
(43) Veröffentlichungstag der Anmeldung: 19.11.2014
(73) Patentinhaber: Dr. Johannes Heidenhain GmbH, 83301 Traunreut (DE)
(72) Erfinder: Meyer, Hermann, 83458 Schneizlreuth (DE)

(56) Entgegenhaltungen:
- DE-A1- 10 317 591
- DE-T2- 69 632 946
- US-A1- 2005 201 648

## Beschreibung

### GEBIET DER TECHNIK

Die Erfindung betrifft eine Winkelmesseinrichtung gemäß dem Patentanspruch 1.

Winkelmesseinrichtungen, häufig auch Drehgeber genannt, dienen zur Messung von Drehbewegungen eines drehbar gelagerten Maschinenteils, insbesondere einer Welle, über eine oder mehrere Umdrehungen. Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen. Häufig werden derartige Winkelmesseinrichtungen in Verbindung mit Elektromotoren zur Erzeugung eines Kommutierungssignals verwendet.

Winkelmesseinrichtungen die vergleichsweise hohe Anforderungen bezüglich der Messgenauigkeit erfüllen müssen, arbeiten häufig nach einem optischen Messprinzip, wobei dann oft die Maßverkörperung beispielsweise als ein Glasring mit einer darauf aufgebrachten Winkelskalierung ausgestaltet ist. Die Winkelskalierung wird in diesem Fall durch ein Auflicht- oder ein Durchlichtverfahren abgetastet. Um eine hohe Messgenauigkeit zu gewährleisten ist es wichtig, dass die Maßverkörperung vor Verunreinigungen geschützt ist. Besonders nachteilig kann es sein, wenn Schmiermittel oder Bestandteile davon aus dem Wälzlager austreten und sich auf der Maßverkörperung, insbesondere im Bereich der Winkelskalierung niederschlagen. Derartige Verunreinigungen sind häufig als Tröpfchen ausgebildet und entfalten eine optische Wirkung, ähnlich einer Linse. Entsprechend werden unter solchen Umständen die Lichtstrahlen abgelenkt, was zu einer Fehlmessung führen kann.

### STAND DER TECHNIK

Aus der EP 2378251 A2 der Anmelderin ist eine Winkelmesseinrichtung bekannt, die eine Welle mit einer Rille aufweist, welche mit einem Hohlraum zur Aufnahme von Schmiermittel verbunden ist.

In der Offenlegungsschrift US 2005/201648 A1 wird eine kombinierte Lager-Sensor-Anordnung beschrieben. Das betreffende Lager weist eine stirnseitige Dichtung auf, wobei zudem im Bereich des Abtastspaltes ein Spalt vorliegt, der als Labyrinth-Dichtungs-Spalt fungiert.

Die Druckschrift DE 696 32 946 T2 betrifft eine Vorrichtung zum Messen eines relativen Winkelversatzes. Insbesondere wird dort eine Dichtung des Labyrinthtyps offenbart. Die Dichtung hat den Zweck, Schmierfett und/oder andere verschmutzende Teile daran zu hindern, zur optischen Messvorrichtung zu gelangen.

### ZUSAMMENFASSUNG DER ERFINDUNG

Der Erfindung liegt die Aufgabe zugrunde, eine Winkelmesseinrichtung zu schaffen, durch die eine hohe Messgenauigkeit zuverlässig und dauerhaft erreichbar ist.

Diese Aufgabe wird erfindungsgemäß durch die Schaffung einer Winkelmesseinrichtung mit den Merkmalen des Patentanspruchs 1 gelöst.

Demnach umfasst die Winkelmesseinrichtung eine Welle, die mit Hilfe zumindest eines Wälzlagers relativ zu einem Körper um eine Achse, die sich in eine z-Richtung erstreckt, drehbar angeordnet ist. An der Welle ist eine Maßverkörperung drehfest fixiert, wobei die Maßverkörperung zumindest eine Stirnfläche aufweist. Der Körper weist eine Abtasteinrichtung zur Abtastung der Maßverkörperung auf. Sowohl das Wälzlager als auch eine Dichtungseinheit sind an einer Seite der Maßverkörperung angeordnet, wobei die betreffende Seite, bezogen auf die z-Richtung, der Stirnfläche zugewandt ist. Dabei umfasst die Dichtungseinheit relativ zueinander drehbare Ringe, welche durch einen Spalt, insbesondere in Radialrichtung, voneinander getrennt angeordnet sind, wobei der Spalt zumindest teilweise mit einer Flüssigkeit gefüllt ist. Die Dichtungseinheit ist insbesondere berührungslos ausgestaltet.

Die Winkelmesseinrichtung dient zu einer Messung einer Drehbewegung beispielsweise die Bestimmung einer vorliegenden Drehstellung oder Drehgeschwindigkeit.

Die Maßverkörperung kann ringförmig ausgestaltet sein und ist dann geometrisch betrachtet ein Hohlzylinder mit umlaufenden Mantelseiten, die eine extrem geringe Höhe aufweisen und ringförmigen parallel zueinander ausgerichteten Stirnflächen, die auch als Grund- oder Deckflächen bezeichnet werden können. Die Winkelskalierung oder Winkelcodierung kann auf einer der Stirnflächen oder einer der Mantelseiten, mit Vorteil auf der außen liegenden Mantelseite, aufgebracht sein.

Die Maßverkörperung kann so an der Welle fixiert sein, dass die besagte Stirnfläche von einer Geraden, welche eine Richtungskomponente in z-Richtung aufweist, in einem Schnittpunkt geschnitten wird. Insbesondere kann die Stirnfläche in einer Ebene liegen, die mit einer orthogonalen Richtungskomponente in Bezug auf die z-Richtung orientiert ist. Demgemäß ist der Ebene, in welcher die Stirnfläche liegt, ein Normalenvektor zuordenbar, der eine Richtungskomponente parallel zur z-Richtung aufweist. Mit Vorteil ist die Stirnfläche orthogonal zur z-Richtung orientiert, beziehungsweise ist der Normalenvektor der betreffenden Stirnfläche parallel zur Achse ausgerichtet und damit in z-Richtung orientiert.

Die Tatsache, dass sowohl das Wälzlager als auch die Dichtungseinheit an derjenigen Seite der Maßverkörperung, die bezogen auf die z-Richtung der Stirnfläche zugewandt ist, angeordnet sind, bedeutet dass ausgehend von der Maßverkörperung in axialer Richtung (z-Richtung) entlang der Welle zunächst das Wälzlager und dann die Dichtungseinheit angeordnet ist. Alternativ können auch ausgehend von der Maßverkörperung in axialer Richtung zunächst die Dichtungseinheit und dann das Wälzlager angeordnet sein. Demzufolge befindet sich die Maßverkörperung nicht zwischen dem Wälzlager und der Dichtungseinheit.

Die Winkelmesseinrichtung ist vorteilhafterweise so konfiguriert, dass die Dichtungseinheit einen an der Welle montierten inneren Ring und einen am Körper montiertem äußeren Ring aufweist. Die Ringe sind dabei derart ausgestaltet, dass der maximale Durchmesser des an der Welle montierten Rings größer ist als der minimale Durchmesser des am Körper montierten Rings.

Mit Vorteil weist der an der Welle montierte innere Ring der Dichtungseinheit einen in Radialrichtung auskragenden Ansatz auf, wobei der Ansatz im Betrieb der Winkelmesseinrichtung mit der Flüssigkeit in Kontakt ist. Weiterhin kann die Winkelmesseinrichtung so ausgestaltet sein, dass der Ansatz in eine umlaufende Nut des anderen am Körper montierten Rings der Dichtungseinheit eintaucht.

Vorzugsweise ist zumindest einer der Ringe der Dichtungseinheit mehrteilig, insbesondere zweiteilig aufgebaut. Insbesondere kann der am Körper montierte Ring mehrteilig aufgebaut sein.

In weiterer Ausgestaltung der Erfindung kann die Winkelmesseinrichtung zwei Wälzlager aufweisen, die insbesondere mit axialem Versatz, also mit einem Versatz in z-Richtung an der Welle angeordnet sind. Bei dieser Konstruktion kann die Dichtungseinheit einen an der Welle montierten Ring und einen am Körper montierten Ring aufweisen, wobei die Ringe dann zwischen den Wälzlagern angeordnet sein können.

Gemäß einer Weiterbildung der Erfindung kann im endmontierten Zustand der Winkelmesseinrichtung zumindest einer der Ringe der Dichtungseinheit in z-Richtung vorgespannt sein. Mit Vorteil ist insbesondere der am Körper montierte Ring vorgespannt.

Die Wälzlager weisen jeweils einen Innenring einen Außenring sowie Wälzkörper auf, die radial zwischen dem Innenring und dem Außenring angeordnet sind, wobei sich Schmiermittel im Bereich der Wälzkörper befindet. In besonderer Ausgestaltung der Erfindung kann der am Körper montierte Ring der Dichtungseinheit, derart vorgespannt sein, dass eine in z-Richtung orientierte Kraft erzeugbar ist, durch welche die Außenringe der Wälzlager gegeneinander axial vorgespannt sind. Alternativ oder ergänzend kann auch der an der Welle montierte Ring der Dichtungseinheit, derart vorgespannt sein, dass eine in z-Richtung orientierte Kraft erzeugbar ist, durch welche die Innenringe der Wälzlager gegeneinander axial vorgespannt sind.

In weiterer Ausgestaltung der Erfindung weist der an Welle montierte Ring ein Reservoir für die Flüssigkeit, z. B. Öl, auf. Die Dichtungseinheit umfasst relativ zueinander drehbare Ringe, welche durch einen Spalt in Radialrichtung voneinander getrennt angeordnet sein können, wobei der Spalt zumindest teilweise mit einer Flüssigkeit gefüllt ist. Dabei kann das Reservoir radial innen liegend angeordnet sein, so dass bei rotierendem Ring die im Reservoir befindliche Flüssigkeit in den Spalt gedrückt wird.

Weitere vorteilhafte Ausgestaltungen der Erfindung sind den abhängigen Ansprüchen zu entnehmen.

Weitere Merkmale und Vorteile der Erfindung werden bei der nachfolgenden Beschreibung zweier Ausführungsbeispiele anhand der Figuren deutlich werden.

### KURZE BESCHREIBUNG DER ZEICHNUNGEN

- Figur 1: eine Längsschnittdarstellung einer Winkelmesseinrichtung,
- Figur 2: eine Detailansicht der Winkelmesseinrichtung,
- Figur 3: eine Detailansicht der Winkelmesseinrichtung, gemäß einem zweiten Ausführungsbeispiel.

### BESCHREIBUNG DER AUSFÜHRUNGSFORMEN

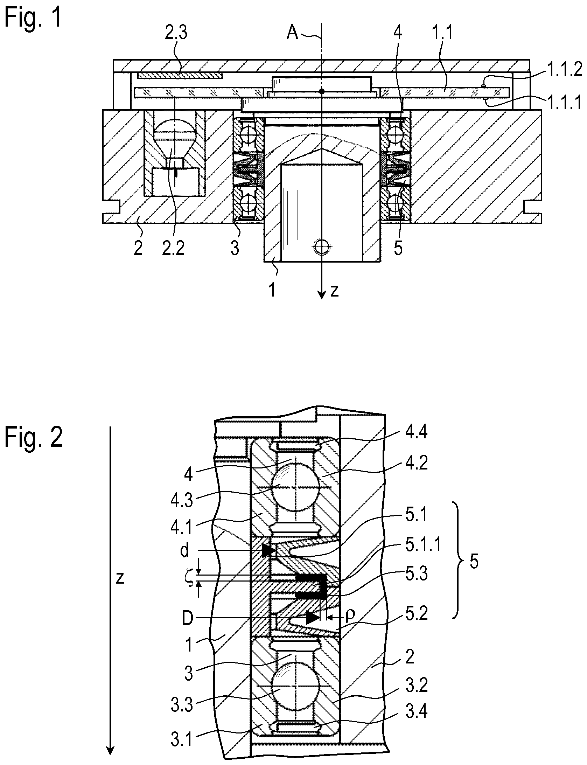

Die in der Figur 1 in einer mittigen Längsschnittdarstellung gezeigte Winkelmesseinrichtung umfasst einen Stator und einen Rotor. Der Rotor weist eine Welle 1 mit einem Absatz auf, an dem eine Maßverkörperung 1.1, z. B. durch eine Klebung, fest und nur mit geringen Toleranzabweichungen zentrisch bezüglich der Achse A verbunden ist. Die Achse A erstreckt sich in z-Richtung. Im Hinblick auf ihre Maßgenauigkeit und Planarität ist die Maßverkörperung 1.1 mit hoher Präzision gefertigt. Die Maßverkörperung 1.1 besteht aus Glas und ist ringförmig ausgestaltet. Sie weist naturgemäß zwei Stirnflächen 1.1.1, 1.1.2 auf, wobei auf einer der Stirnflächen 1.1.1, 1.1.2 eine Winkelskalierung aufgebracht ist. Die Winkelskalierung kann beispielsweise als eine inkrementale Teilung mit radial orientierten Skalenstrichen ausgestaltet sein, wobei jedoch zusätzlich oder alternativ auch ein absoluter Code vorgesehen sein kann.

Die Stirnflächen 1.1.1, 1.1.2 liegen in einer Ebene, die mit einer orthogonalen Richtungskomponente in Bezug auf die z-Richtung orientiert ist. Mit anderen Worten weist ein Normalenvektor auf einer der Stirnflächen 1.1.1, 1.1.2 eine Richtungskomponente parallel zur z-Richtung auf. In den vorgestellten Ausführungsbeispielen sind die Stirnflächen 1.1.1, 1.1.2 orthogonal zur z-Richtung orientiert, beziehungsweise sind die Normalenvektoren der Stirnflächen 1.1.1, 1.1.2 parallel zur Achse A ausgerichtet und damit in z-Richtung orientiert.

Die Welle 1 ist innerhalb eines Körpers 2, der dem Stator zuzuordnen ist, durch zwei Wälzlager 3, 4, drehbar gelagert.

Der Körper 2 weist eine Lichtquelle 2.2 auf, die beispielsweise eine LED und eine Kollimatorlinse umfasst, so dass durch die Lichtquelle 2.2 kollimiertes Licht emittiert wird. Dieses Licht tritt durch die Maßverkörperung 1.1 bzw. deren Winkelskalierung hindurch und wird entsprechend der Winkelstellung zwischen Rotor und Stator beziehungsweise Welle 1 und Körper 2 moduliert. Das modulierte Licht wird von einer Abtasteinrichtung 2.3, welche am Körper 2 befestigt ist, abgetastet. Entsprechende lichtempfindliche Detektoren befinden sich auf der als bestückte Leiterplatte ausgestalteten Abtasteinrichtung 2.3. Unter anderem umfasst die Abtasteinrichtung 2.3 auch elektronische Bauelemente zur Signalformung - beispielsweise zur Verstärkung und Digitalisierung - der von den Detektoren gelieferten Abtastsignale. Über ein in den Figuren nicht gezeigtes Anschlusskabel wird eine elektrische Verbindung zwischen der Winkelmesseinrichtung und einer Folgeelektronik hergestellt, so dass elektrische Signale und elektrische Energie zwischen der Folgeelektronik und der Winkelmesseinrichtung übertragen werden können.

Um den Körper 2 herum und um die übrigen statorseitigen Bauteile kann ein Gehäuse montiert werden, so dass unter anderem die Lichtquelle 2.2, die Maßverkörperung 1.1 und die Abtasteinrichtung 2.3 gegenüber Umwelteinflüssen geschützt sind. Häufig werden derartige Gehäuse nicht luftdicht ausgeführt, beispielsweise bei Anwendungen im Zusammenhang mit Elektroantrieben. Gegebenenfalls kann auch komplett auf ein Gehäuse verzichtet werden.

Die Winkelmesseinrichtung ist zum Anbau an eine Maschine bestimmt, wobei die Welle 1 zum drehfesten Anschluss an ein zu messendes Bauelement, etwa an einer Motorwelle, ausgebildet ist. Durch die Winkelmesseinrichtung kann also die relative Winkelstellung zwischen dem Stator und dem Rotor beziehungsweise zwischen der Welle 1 und dem Körper 2 bestimmt werden. Derartige Winkelmesseinrichtungen werden auch häufig als Drehgeber bezeichnet.

In der Figur 2 ist eine Detailansicht der Winkelmesseinrichtung dargestellt. Die Wälzlager 3, 4 umfassen jeweils einen Innenring 3.1, 4.1, einen Außenring 3.2, 4.2 sowie radial zwischen den Innenringen 3.1, 4.1, und den Außenringen 3.2, 4.2 Kugeln 3.3, 4.3 und jeweils eine Deckscheibe 3.4., 4.4.

Axial zwischen den beiden Wälzlagern 3, 4 befindet sich eine Dichtungseinheit 5, welche einen inneren Ring 5.1 und einen äußeren Ring 5.2 umfasst. Rotorseitig ist der innere Ring 5.1 an der Welle 1 montiert. Dieser Ring 5.1 umfasst einen radial nach außen ragenden umlaufenden Ansatz 5.1.1. Statorseitig ist ein zweigeteilter Ring 5.2 axial zwischen den Außenringen 3.2, 4.2 am Körper 2 montiert. Der Ring 5.2 und der Ansatz 5.1.1 überlappen sich radial, so dass der maximale Durchmesser D des an der Welle 1 montierten inneren Rings 5.1 größer ist als der minimale Durchmesser d des am Körper 2 montierten äußeren Rings 5.2. Es liegt also in Axialrichtung zu beiden Seiten des Ansatzes 5.1.1 jeweils ein Spalt mit der Breite ζ vor. Zudem sind der Ansatz 5.1.1 und der am Körper 2 montierte äußere Ring 5.2 einander gegenüberliegend angeordnet und durch einen umlaufenden Spalt mit der Breite p in Radialrichtung getrennt.

Im Zuge der Montage der Winkelmesseinrichtung wird Öl in den Spalt zwischen dem am Körper 2 montierten Ring 5.2 und dem Ansatz 5.1.1 gegeben. Der Spalt ist vergleichsweise klein, so dass ein Ölfilm 5.3 durch Kaplliarkräfte in diesem Spalt gehalten werden kann.

Der statorseitige am Körper 2 montierte zweigeteilte äußere Ring 5.2 weist im entspannten Zustand eine größere axiale Höhe auf als der vorgesehene Abstand der Wälzlager 3, 4, insbesondere der Außenringe 3.2, 4.2, in der Winkelmesseinrichtung. Aus diesem Grund ist der äußere Ring 5.2 nach erfolgter Montage in der Winkelmesseinrichtung in z-Richtung vorgespannt beziehungsweise in Axialrichtung elastisch gestaucht. Entsprechend wird auf die Außenringe 3.2, 4.2 eine axiale Vorspannkraft eingeleitet. Über die Kugeln 3.3, 4.3 und die Laufrillen wird die Vorspannkraft auch auf die Innenringe 3.1, 4.1 übertragen. Die Innenringe 3.1, 4.1 sind unverschiebbar, beispielsweise durch eine Klebung oder eine Presspassung, mit der Welle 1 verbunden. Somit erfüllt die Dichtungseinheit 5 nicht nur eine Dichtfunktion, sondern dient auch als Element zur Erreichung einer mechanischen Vorspannung zwischen den Wälzlagern 3, 4.

Für einen einwandfreien Betrieb der Winkelmesseinrichtung ist es erforderlich, dass die Wälzlager 3, 4 geschmiert sind, weshalb jeweils zwischen dem Innenring 3.1, 4.1 und dem Außenring 3.2, 4.2 Schmiermittel, bzw. Schmierfett vorgesehen ist. Die ringförmigen Deckscheiben 3.4, 4.4 sollen im Grunde dazu dienen, dass das Schmiermittel, bzw. Schmierfett in den Wälzlagern 3, 4 verbleibt und nicht in Richtung der optisch abtastbaren Maßverkörperung 2 wandert. Die Deckscheiben 3.4, 4.4 sind jeweils mit dem Außenring 3.2, 4.2 fest verbunden, so dass im Betrieb der Winkelmesseinrichtung keine Relativbewegung zwischen den Deckscheiben 3.4, 4.4 und dem jeweiligen Außenring 3.2, 4.2 stattfindet. Um in der Winkelmesseinrichtung möglichst wenig Reibungswärme zu erzeugen, berühren die Deckscheiben 3.4, 4.4 keine rotierenden Teile, insbesondere nicht die Innenringe 3.1, 4.1.

Im Betrieb der Winkelmesseinrichtung kann die ringförmige Maßverkörperung 1.1 mit erheblicher Drehzahl rotieren. Dadurch wird, ähnlich wie bei einem Radialventilator, ein radialer Druckgradient aufgebaut, so dass radial innen an der Maßverkörperung 1.1, insbesondere radial innen an den Stirnflächen 1.1.1, 1.1.2, ein niedrigerer Luftdruck vorherrscht als im radial äußeren Bereich. Somit entsteht gleichsam eine Sogwirkung durch die rotierende Maßverkörperung 1.1. Damit bei derartigen Druckverhältnissen gewährleistet ist, dass die Maßverkörperung 1.1 nicht durch Schmiermittelbestandteile der Wälzlager 3, 4 verunreinigt wird, ist axial zwischen den Wälzlagern 3, 4 die Dichtungseinheit 5 mit dem Ölfilm 5.3 vorgesehen. Denn durch diese Dichtungseinheit 5 wird erreicht, dass auch bei einem Unterdruck im radial inneren Bereich der Maßverkörperung 1.1 keine Luft durch die Wälzlager 3, 4 strömt. Insbesondere, wenn die Winkelmesseinrichtung kein Gehäuse aufweist oder ein Gehäuse besitzt, das nicht Luftdicht ist, ist es wichtig, dass ein Durchströmen der Wälzlager 3, 4 mit Luft unterbunden wird. Die Rotation der Welle 1 bewirkt selbstverständlich auch eine Rotation des inneren Rings 5.1 der Dichtungseinheit 5 mit seinem Ansatz 5.1.1. Der Ansatz 5.1.1. ist - hervorgerufen durch Kapillarkräfte beziehungsweise Grenzflächenspannungseffekte - mit Öl benetzt. Bei steigender Drehzahl wird daher der Ölfilm 5.3 immer mehr in den radial äußeren Bereich gedrängt, so dass eine optimale Abdichtung bei hohen Drehzahlen gewährleistet ist. Gerade bei hohen Drehzahlen ist aber andererseits die oben beschriebene Sogwirkung durch die rotierende Maßverkörperung 1.1 am größten. Der innere und der äußere Ring 5.1, 5.2 der Dichtungseinheit 5 berühren sich also nicht. Dies hat unter anderem zur Folge, dass die Dichtungseinheit 5 extrem reibungsarm arbeitet und daher praktisch keine Abwärme in der Winkelmesseinrichtung erzeugt wird.

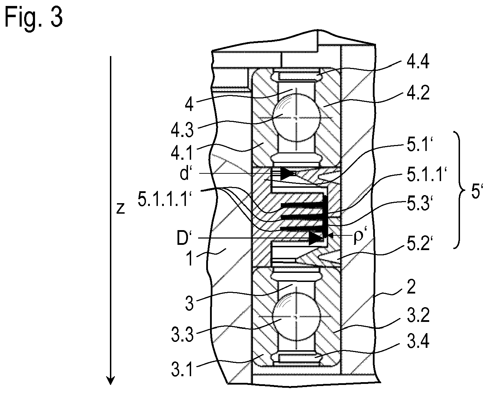

In der Figur 3 ist ein zweites Ausführungsbespiel gezeigt. Dieses unterscheidet sich vom ersten Ausführungsbespiel durch eine abgewandelte Dichtungseinheit 5'. Diese Dichtungseinheit 5' umfasst einen an der Welle 1 montierten inneren Ring 5.1 der einen radial nach außen ragenden umlaufenden Ansatz 5.1.1' aufweist. Dieser Ansatz 5.1.1' hat seinerseits drei umlaufende Ausnehmungen, die als Reservoirs 5.1.1.1' für das Öl dienen. Die Dichtungseinheit 5' umfasst zudem einen äußeren Ring 5.2', welcher zweigeteilt ausgestaltet ist und statorseitig axial zwischen den Außenringen 3.2, 4.2 am Körper 2 montiert ist.

Der Ring 5.2' und der Ansatz 5.1.1' überlappen sich auch im zweiten Ausführungsbeispiel radial, so dass der maximale Durchmesser D' des an der Welle 1 montierten inneren Rings 5.1 größer ist als der minimale Durchmesser d' des am Körper 2 montierten äußeren Rings 5.2'. Der Ansatz 5.1.1 und der am Körper 2 montierte äußere Ring 5.2 sind einander gegenüberliegend angeordnet durch einen umlaufenden Spalt mit der Breite p' in Radialrichtung getrennt.

Die Reservoirs 5.1.1.1' sind in Bezug auf den umlaufenden Spalt mit der Breite p' radial innen liegend angeordnet, so dass im Betrieb der Winkelmesseinrichtung, also bei rotierendem Ring 5.1 das in den Reservoirs 5.1.1.1' befindliche Öl in den Spalt gedrückt wird.

Im eingebauten Zustand, wie in der Figur 3 gezeigt, ist der am Körper 2 montierte Ring 5.2' in z-Richtung vorgespannt, so dass analog zum ersten Ausführungsbeispiel auch hier durch die Dichtungseinheit 5' eine axiale Vorspannung der Wälzlager 3, 4 erreicht wird.

Durch die spezielle Ausgestaltung der Winkelmesseinrichtung ist es nun möglich Schmiermittelreste, z. B. Öltröpfchen, die aus dem Schmiermittel austreten, von der Maßverkörperung fern zu halten. Derartige Schmiermittelreste führen häufig zu fehlerhaften Messungen, weil dadurch der Strahlengang des von der Lichtquelle 2.2 emittierten Lichts beeinflusst werden kann. Dieses Fernhalten der Schmiermittelreste wird auch während eines Betriebs bei hohen Drehzahlen gewährleistet. Denn durch die dadurch bedingten Fliehkräfte wird die Dichtwirkung der Dichtungseinheit verbessert. Obwohl durch die Dichtungseinheit 5, 5' im Betrieb eine hohe Dichtwirkung erzielt wird, wird praktisch keine Wärme in der Winkelmesseinrichtung von der Dichtungseinheit 5, 5' erzeugt, weil diese extrem reibungsarm arbeitet. Auch diese Tatsache trägt dazu bei, dass sehr genaue also nicht fehlerhafte Messergebnisse erreicht werden.

## Patentansprüche

1. Winkelmesseinrichtung umfassend eine Welle (1), eine Maßverkörperung (1.1), einen Körper (2), ein Wälzlager (3, 4) und eine Dichtungseinheit (5; 5'), wobei die Welle (1) mit Hilfe des Wälzlagers (3, 4) relativ zum Körper (2) um eine sich in eine z-Richtung erstreckenden Achse (A) drehbar angeordnet ist, wobei an der Welle (1) die Maßverkörperung (1.1), welche eine Stirnfläche (1.1.1) aufweist, drehfest fixiert ist, der Körper (2) eine Abtasteinrichtung (2.3) zur Abtastung der Maßverkörperung (1.1) aufweist, sowohl das Wälzlager (3, 4) als auch die Dichtungseinheit (5; 5') an derjenigen Seite der Maßverkörperung (1.1) angeordnet sind, die bezogen auf die z-Richtung, der Stirnfläche (1.1.1) zugewandt ist, wobei die Dichtungseinheit (5; 5') relativ zueinander drehbare Ringe (5.1, 5.2; 5.1', 5.2') umfasst, welche durch einen Spalt voneinander getrennt angeordnet sind, sowie eine Flüssigkeit (5.3; 5.3'), mit der Spalt zumindest teilweise gefüllt ist.

2. Winkelmesseinrichtung gemäß dem Anspruch 1, wobei die Dichtungseinheit (5; 5') einen an der Welle (1) montierten Ring (5.1; 5.1') und einen am Körper (2) montiertem Ring (5.2; 5.2') aufweist, wobei die Ringe (5.1, 5.2; 5.1', 5.2') derart ausgestaltet sind, dass der maximale Durchmesser (D; D') des an der Welle (1) montierten Rings (5.1; 5.1') größer ist als der minimale Durchmesser (d; d') des am Körper (2) montierten Rings (5.2; 5.2').

3. Winkelmesseinrichtung gemäß dem Anspruch 2, wobei der an der Welle (1) montierte Ring (5.1; 5.1') einen in Radialrichtung auskragender Ansatz (5.1.1) aufweist, welcher mit der Flüssigkeit (5.3; 5.3') in Kontakt ist.

4. Winkelmesseinrichtung gemäß dem Anspruch 2 oder 3, wobei der an der Welle (1) montierte Ring (5.1; 5.1') einen in Radialrichtung auskragender Ansatz (5.1.1) aufweist, welcher in eine umlaufende Nut des am Körper (2) montierten Rings (5.2; 5.2') eintaucht.

5. Winkelmesseinrichtung gemäß einem der vorhergehenden Ansprüche, wobei zumindest einer der Ringe (5.1, 5.2; 5.1', 5.2') mehrteilig aufgebaut ist.

6. Winkelmesseinrichtung gemäß einem der vorhergehenden Ansprüche, wobei die Winkelmesseinrichtung zwei Wälzlager (3, 4) aufweist.

7. Winkelmesseinrichtung gemäß dem Anspruch 6, wobei die Dichtungseinheit (5; 5') einen an der Welle (1) montierten Ring (5.1; 5.1') und einen am Körper (2) montiertem Ring (5.2; 5.2') aufweist, wobei die Ringe (5.1, 5.2; 5.1', 5.2') zwischen den Wälzlagern (3, 4) angeordnet sind.

8. Winkelmesseinrichtung gemäß dem Anspruch 7, wobei zumindest einer der Ringe (5.1, 5.2; 5.1', 5.2') in z-Richtung vorgespannt ist.

9. Winkelmesseinrichtung gemäß dem Anspruch 7 oder 8, wobei der am Körper (2) montierte Ring (5.2; 5.2') in z-Richtung vorgespannt ist.

10. Winkelmesseinrichtung gemäß einem der vorhergehenden Ansprüche, wobei der an Welle (1) montierte Ring (5.1') ein Reservoir (5.1.1.1') für die Flüssigkeit aufweist.

## Claims

1. Angle measuring apparatus comprising a shaft (1), a measuring scale (1.1), a body (2), a rolling-contact bearing (3, 4) and a sealing unit (5; 5'), wherein the shaft (1) is arranged such that it can be rotated relative to the body (2) about an axis (A) extending in a z direction with the aid of the rolling-contact bearing (3, 4),
wherein the measuring scale (1.1), which has an end face (1.1.1), is fixed in a rotationally fixed manner to the shaft (1),
the body (2) has a scanning devise (2.3) for scanning the measuring scale (1.1),
both the rolling-contact bearing (3, 4) and the sealing unit (5; 5') are arranged on that side of the measuring scale (1.1) which, based on the z direction, faces the end face (1.1.1),
wherein the sealing unit (5; 5') comprises rings (5.1, 5.2; 5.1', 5.2') which can be rotated relative to one another and which are arranged so as to be separated from one another by a gap, and a liquid (5.3; 5.3'), with which the gap is at least partly filled.

2. Angle measuring apparatus according to Claim 1, wherein the sealing unit (5; 5') has a ring (5.1; 5.1') mounted on the shaft (1) and a ring (5.2; 5.2') mounted on the body (2), wherein the rings (5.1, 5.2; 5.1', 5.2') are configured in such a way that the maximum diameter (D; D') of the ring (5.1; 5.1') mounted on the shaft (1) is greater than the minimum diameter (d; d') of the ring (5.2; 5.2') mounted on the body (2).

3. Angle measuring apparatus according to Claim 2, wherein the ring (5.1; 5.1') mounted on the shaft (1) has an extension (5.1.1) projecting in the radial direction, which is in contact with the liquid (5.3; 5.3').

4. Angle measuring apparatus according to Claim 2 or 3, wherein the ring (5.1; 5.1') mounted on the shaft (1) has an extension (5.1.1) projecting in the radial direction, which dips into a circumferential groove in the ring (5.2; 5.2') mounted on the body (2).

5. Angle measuring apparatus according to one of the preceding claims, wherein at least one of the rings (5.1, 5.2; 5.1', 5.2') is assembled from many components.

6. Angle measuring apparatus according to one of the preceding claims, wherein the angle measuring apparatus has two rolling-contact bearings (3, 4).

7. Angle measuring apparatus according to Claim 6, wherein the sealing unit (5; 5') has a ring (5.1; 5.1') mounted on the shaft (1) and a ring (5.2; 5.2') mounted on the body (2), wherein the rings (5.1, 5.2; 5.1', 5.2') are arranged between the rolling-contact bearings (3, 4).

8. Angle measuring apparatus according to Claim 7, wherein at least one of the rings (5.1, 5.2; 5.1', 5.2') is preloaded in the z direction.

9. Angle measuring apparatus according to Claim 7 or 8, wherein the ring (5.2; 5.2') mounted on the body (2) is preloaded in the z direction.

10. Angle measuring apparatus according to one of the preceding claims, wherein the ring (5.1') mounted on the shaft (1) has a reservoir (5.1.1.1') for the liquid.

## Revendications

1. Dispositif de mesure d'angle, comprenant un arbre (1), une mesure matérialisée (1.1), un corps (2), un palier à roulement (3, 4) et une unité d'étanchéité (5 ; 5'), l'arbre (1) étant disposé de manière à pouvoir tourner à l'aide du palier à roulement (3, 4) par rapport au corps (2) autour d'un axe (A) s'étendant dans une direction z, la mesure matérialisée (1.1), qui présente une surface frontale (1.1.1), étant fixée de manière solidaire en rotation à l'arbre (1), le corps (2) présentant un dispositif de balayage (2.3) pour balayer la mesure matérialisée (1.7.), et le palier à roulement (3, 4) ainsi que l'unité d'étanchéité (5 ; 5') étant disposés du côté de la mesure matérialisée (1.1) qui est tourné vers la surface frontale (1.1.1) par rapport à la direction z, l'unité d'étanchéité (5 ; 5') comprenant des bagues (5.1, 5.2 ; 5.1', 5.2') pouvant tourner les unes par rapport aux autres, lesquelles sont disposées de manière séparée les unes des autres par un espace, et un liquide (5.3 ; 5.3') remplissant la fente au moins en partie.

2. Dispositif de mesure d'angle selon la revendication 1, dans lequel l'unité d'étanchéité (5 ; 5') présente une bague (5.1 ; 5.1') montée sur l'arbre (1) et une bague (5.2 ; 5.2') montée sur le corps (2), les bagues (5.1, 5.2 ; 5.1', 5.2') étant réalisées de telle sorte que le diamètre maximal (D ; D') de la bague (5.1 ; 5.1') montée sur l'arbre (1) soit supérieur au diamètre minimale (d ; d') de la bague (5.2 ; 5.2') montée sur le corps (2).

3. Dispositif de mesure d'angle selon la revendication 2, dans lequel la bague (5.1 ; 5.1') montée sur l'arbre (1) présente une pièce rapportée (5.1.1) faisant saillie dans la direction radiale, laquelle est en contact avec le liquide (5.3 ; 5.3').

4. Dispositif de mesure d'angle selon la revendication 2 ou 3, dans lequel la bague (5.1 ; 5.1') montée sur l'arbre (1) présente une pièce rapportée (5.1.1) faisant saillie dans la direction radiale, laquelle plonge dans une rainure périphérique de la bague (5.2 ; 5.2') montée sur le corps (2).

5. Dispositif de mesure d'angle selon l'une quelconque des revendications précédentes, dans lequel au moins l'une des bagues (5.1, 5.2 ; 5.1', 5.2') est réalisée en plusieurs parties.

6. Dispositif de mesure d'angle selon l'une quelconque des revendications précédentes, dans lequel le dispositif de mesure d'angle présente deux paliers à roulement (3, 4).

7. Dispositif de mesure d'angle selon la revendication 6, dans lequel l'unité d'étanchéité (5 ; 5') présente une bague (5.1 ; 5.1') montée sur l'arbre (1) et une bague (5.2 ; 5.2') montée sur le corps (2), les bagues (5.1, 5.2 ; 5.1', 5.2') étant disposées entre les paliers à roulement (3, 4).

8. Dispositif de mesure d'angle selon la revendication 7, dans lequel au moins l'une des bagues (5.1, 5.2 ; 5.1', 5.2') est précontrainte dans la direction z.

9. Dispositif de mesure d'angle selon la revendication 7 ou 8, dans lequel la bague (5.2 ; 5.2') montée sur le corps (2) est précontrainte dans la direction z.

10. Dispositif de mesure d'angle selon l'une quelconque des revendications précédentes, dans lequel la bague (5.1') montée sur l'arbre (1) présente un réservoir (5.1.1.1') pour le liquide.
